# EUROPÄISCHE PATENTSCHRIFT

(11) **EP 1 635 084 B1**
(45) Veröffentlichungstag und Bekanntmachung des Hinweises auf die Patenterteilung: **04.07.2007**
(21) Anmeldenummer: 05019295.4
(22) Anmeldetag: 06.09.2005
(51) Int. Cl.: F16F 9/53

(54) **Vorrichtung zum Fixieren von beweglich gelagerten Teilen**
Device for fixing movably supported parts
Dispositif pour fixer les pièces mobiles

(30) Priorität: 08.09.2004 DE 102004043281
(43) Veröffentlichungstag der Anmeldung: 15.03.2006
(73) Patentinhaber: Fludicon GmbH, 64293 Darmstadt (DE)
(72) Erfinder: Scherk, Horst, 64372 Ober-Ramstadt (DE); Johnston, Lucien, 60389 Frankfurt/Main (DE); Adams, Dorothea, 64572 Büttelborn (DE); Rosenfeldt, Horst, Dr., 64846 Gross-Zimmern (DE)
(74) Vertreter: Behrens, Helmut

(56) Entgegenhaltungen:
- EP-A- 0 581 476
- EP-A- 1 437 526
- DE-A1- 10 248 342
- US-A- 5 632 361
- US-A1- 2003 019 622
- US-B1- 6 311 810

## Beschreibung

Aus der DE 197 54 167 ist eine Vorrichtung zur stufenlosen Arretierung einer um eine Achse schwenkbaren Tür oder Klappe bekannt. Die Arretiereinrichtung umfasst dabei eine Kolben-Zylinder-Einheit auf Basis elektrorheologischer Flüssigkeiten, so dass eine stufenlose Arretierung durch entsprechende Ansteuerung der Elektrodenanordnung und somit Beeinflussung der Viskosität der elektrorheologischen Flüssigkeiten im Ventilspalt erfolgen kann.

Auch für andere Einsatzgebiote ist eine Arretierung von Kolben-Zylinder-Einheiten notwendig. Bei dem Einsatz eines Stoßdämpfers in Kraftfahrzeugen soll bei Kurvenfahrten beispielsweise der außen liegende Dämpfer für eine gewisse Zeit in seiner Position festgehalten werden.

Der prinzipielle Aufbau von Stoßdämpfern auf Basis elektrorheologischer Flüssigkeiten ist unter anderem aus der Druckschrift "Technischer Einsatz neuer Aktoren", Expert-Verlag, 1995, Seite 57 und 58 bekannt. Bei diesen Stoßdämpfern sind in einem zylindrischen Gehäuse zwei Druckmittelräume durch einen Kolben getrennt, wobei beispielsweise der Kolben Fluiddurchlaßöffnungen besitzt, durch die die elektrorheologische Flüssigkeit strömt. Die Dämpfkraft des Schwingungsdämpfers in Zug und Druckhub ist dann durch Veränderung der rheologischen Eigenschaften des Fluids variabel einstellbar.

In der Regel handelt es sich bei elektrorheologischen Flüssigkeiten um Suspensionen, d.h. in einem Trägermedium suspendierte Festpartikel, die über das elektrische bzw. magnetische Feld polarisiorbar sind.

Bekanntlich kann durch Einwirken eines elektrischen Feldes bzw. magnetischen Feldes die Viskosität von elektrorhcologischen bzw. magnetorheologischen Flüssigkeiten in weiten Bereichen sehr schnell und reversibel eingestellt werden. Bei elektrorheologischen Flüssigkeiten wird hierfür an Elektrodenanordnungen eine elektrische Steuerspannung zur Erzeugung eines elektrischen Feldes gelegt. Die Wechselwirkung zwischen der Elektrodenanordnung und der elektrorheologischen Flüssigkeit kann abhängig von der Art der Flüssigkeitsdeformation nach drei grundsätzlichen Moden unterschieden werden, dem Shear-Mode (Elektroden verschieben sich relativ zueinander in parallelen Ebenen), dem Flow-Mode (Elektroden sind fest angeordnet, die Flüssigkeit strömt zwischen den Elektroden hindurch) und dem Squeeze-Mode (Elektroden verändern ihren Abstand zueinander). Diese Moden können auch in Kombination auftreten. Näheres hierzu findet sich in dem Buch "Technischer Einsatz neuer Aktoren", Expert-Verlag, 1995, Kapitel 2.3.1 und Bild 3.1.

In Dämpfern nach dem Flow-Mode Prinzip fließt die elektrorheologische Flüssigkeit aufgrund einer Kolbenbewegung durch einen separaten, die Druckmittelräume verbindenden Strömungskanal (EP-0581476) der eine Elektrodenanordnung besitzt. Bei einer anderen Ausführungsform beseht der Kolben selbst aus einer Anordnung konzentrischer Elektroden, die abwechselnd gepolt sind. In beiden Fällen kann durch ein elektrisches Feld der Strömungswiderstand der elektrorheologischen Flüssigkeit und dadurch das Dämpferverhalten gesteuert werden.

Aus der DE 4433056 ist ein Schwingungsdämpfer bekannt, der mit einer magnetorheologischen Flüssigkeit arbeitet. Bei diesem Dämpfer bewegt sich innerhalb eines Zylinders ein Kolben, der den Zylinder in zwei Druckmittelräume unterteilt, wobei die Druckmittelräume über zwischen der Kolbenumfangsfläche und der Innenwand des Zylinders gebildeten Strömungskanals verbindbar sind. Im Bereich der Strömungskanäle wird ein magnetisches Feld erzeugt, welches auf die magnetorheologische Flüssigkeit zur Veränderung der Dämfungseigenschaften des Dämpfers einwirkt (Shear-Mode).

Aufgabe der vorliegenden Erfindung ist es, eine Vorrichtung zum Fixieren von beweglich gelagerten Teilen zu schaffen, die eine stufenlose Arretierung und eine schnelle Reaktionszeit ermöglicht.

Diese Aufgabe wird durch die im Patentanspruch 1 angegebenen Merkmale gelöst. Durch entsprechende Ansteuerung der in der abgedichteten Kammer angeordneten Elektrodenanordnungen ist die dort befindliche elektrorheologische Flüssigkeit mit einem elektrischen Feld beaufschlagbar und es kann somit eine stufenlose Arretierung des Kolbens im Zylinder in jeder Position erfolgen.

Ein weiterer Vorteil der erfindungsgemäßen Ausgestaltung besteht darin, dass zwischen Kolben und Zylinder zumindest in einem Kontaktbereich eine abgedichtete mit elektrorheologischer Flüssigkeit gefüllte Kammer gebildet wird. Durch diese Ausgestaltung können die im Zylinder durch den Kolben gebildeten Arbeitskammern mit einem gasförmigen Medium oder mit einer üblichen Hydraulikflüssigkeit gefüllt sein. Nur der Bereich der abgedichteten Kammer muss mit einer elektrorheologischen Flüssigkeit befüllt werden, was eine große Kostenersparnis zum Vorteil hat.

Die Erfindung wird nachfolgend anhand von in den Figuren dargestellten Ausführungsbeispielen näher erläutert.

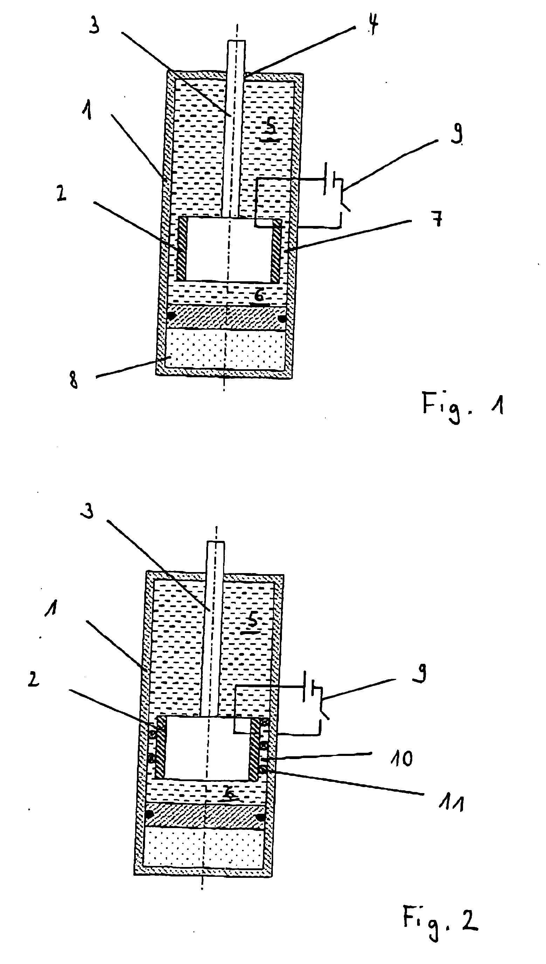

Die im Längsschnitt in Figur 1 dargestellte Vorrichtung zum Fixieren von beweglich gelagerten Teilen besteht aus einem Zylindergehäuse 1 mit einem axial verschiebbar gelagerten Kolben 2. Der Kolben 2 ist einseitig mit einer Kolbenstange 3 verbunden, die über eine Durchführung 4 abgedichtet aus dem zylindergehäuse 1 herausgeführt ist. Der Kolben 2 unterteilt das Zylindergehäuse 1 in zwei volumenveränderliche Arbeitskammern 5, 6 die über einen zwischen dem Kolben 2 und dem Zylindergehäuse 1 gebildeten im Querschnitt ringförmigen Kanal 7 miteinander in Verbindung stehen. Die Arbeitskammern 5, 6 sind mit einer elektrorheologischen oder magnetorheologischen Flüssigkeit als Druckmittel gefüllt.

Ferner ist in dem Zylindergehäuse 1 eine Gasdruckkammer 8 vorgesehen, die dem Ausgleich des Kolbenstangenvolumens und ähnlicher Volumenschwankungen des Druckmittels dient. Die elektrische Ansteuerung 9 der erfindungsgemäßen Vorrichtung ist ebenfalls nur schematisch dargestellt. Das Zylindergehäuse 1 ist geerdet, der Kolben 2 ist zumindest an seinem äußeren Umfangsbereich als ringförmige Elektrode ausgebildet, die mit einer durch die Kolbenstange 3 geführten Hochspannungsleitung in Verbindung steht.

In Figur 2 wird im Unterschied zu der Ausführung nach Figur 1 zwischen Zylindergehäuse 1 und Kolben 2 kein ringförmiger Strömungskanal sondern ein wendelförmiger Strömungskanal 10 gebildet. Hierzu ist auf der äußeren Mantelfläche der am Kolben 3 gebildeten Elektrode ein aus einem Isolationsmaterial bestehendes im Querschnitt kreisförmiges Element 11 wendelförmig um die Mantelfläche angeordnet. Bei dieser Ausführungsform kann der wendelförmige Strömungskanal 10 mit einem elektrischen Feld beaufschlagt werden, so dass der Kolben 3 in jeder beliebigen Position fixiert werden kann.

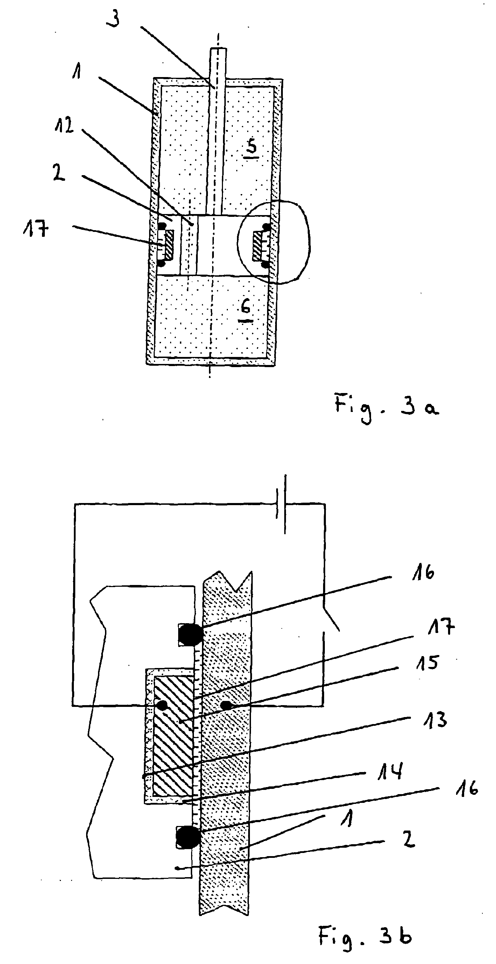

Ein weiteres Aufführungsbeispiel ist in Figur 3a im Längsschnitt sowie in Figur 3b in einem detaillierten Ausschnitt dargestellt. Die erfindungsgemäße Vorrichtung zum Fixieren von beweglich gelagerten Teilen besteht ebenfalls aus einem in einem Zylindergehäuse 1 beweglich gelagerten Kolben 2, der eine einseitig nach außen geführte Kolbenstange 3 besitzt. Der Kolben 2 unterteilt das Zylindergehäuse in zwei volumenveränderliche Arbeitskammern 5, 6, die über eine in den Kolben 2 eingebrachte Durchgangsbohrung 12 miteinander in Verbindung stehen. Die Arbeitskammern 5, 6 sind mit einem gasförmigen Medium als Druckmittel gefüllt. Es könnte allerdings auch eine übliche Hydraulikflüssigkeit als Druckmittel eingesetzt werden.

Wie es insbesondere aus der detaillierten Darstellung in Figur 3b ersichtlich ist, ist in die ringförmige Umfangsfläche des Kolbens 2 eine radiale Nut 13 eingebracht, die mit einer Isolationsschicht 14 ausgekleidet ist. Weiterhin ist in die Nut 13 eine umlaufende, aus einem leitfähigen Material bestehende Elektrode 15 eingefügt. Die Elektrode 15 steht mit einer Hochspannungsleitung in Verbindung. Oberhalb und unterhalb der mit der Elektrode versehenen Nut 13 ist in die Kolbenmantelfläche jeweils ein ringförmig umlaufendes Dichtelement 16, beispielsweise ein O-Ring eingefügt, so dass zwischen den Dichtelementen 16 im Bereich der Elektrodenanordnung 15 ein im Querschnitt ringförmiger Spalt 17 zwischen Kolben 2 und Zylindergehäuse 1 gebildet wird. Das Zylindergehäuse 1 ist geerdet. Der ringförmige Spalt 17 ist mit einer elektrorheologischen Flüssigkeit gefüllt und kann durch entsprechende Ansteuerung mit einem elektrischen Feld beaufschlagt werden.

Diese Ausführung ist insbesondere dann günstig, wenn der Kolben 2 bzw. die mit dem Kolben 2 verbundene Kolbenstange 3 an einem gestellfesten Teil beispielsweise einer PKW-Karosserie befestigt ist und das Zylindergehäuse 1 mit dem beweglich gelagerten Teil beispielsweise der Heckklappe des PKW's in Verbindung steht. Durch entsprechende Ansteuerung der Elektrodenanordnung kann in jeder beliebigen Position eine Fixierung der Heckklappe erfolgen.

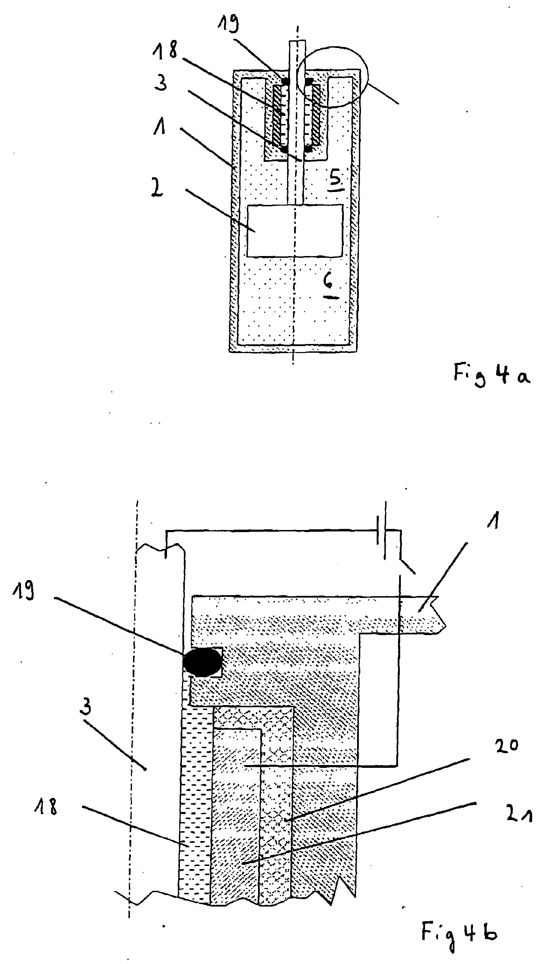

Ein weiteres in Fig. 4a und Fig. 4b dargestelltes Ausführungsbeispiel wird insbesondere dann eingesetzt, wenn das Zylindergehäuse 1 mit dem gestellfesten Teil in Verbindung steht und der Kolben 2 mit Kolbenstange 3 mit dem beweglich gelagerten Teil verbunden ist. Wie bereits zu dem zuvor beschriebenen Ausführungsbeispielen ist hier ebenfalls ein Kolben 2 axial verschiebbar in den Zylindergehäuse 1 gelagert, wodurch zwei volumenveränderliche Arbeitskammern 5, 6 gebildet werden. Die Arbeitskammern 5, 6 sind mit einem gasförmigen Medium gefüllt. Der Kolben 2 ist einseitig mit einer Kolbenstange 3 versehen, die durch eine zylindrische abgedichtete weitere Kammer 18 verläuft und anschließend durch das Zylindergehäuse 1 nach außen geführt ist. Die Abdichtung der weiteren Kammer 18 erfolgt durch eine am oberen Endbereich sowie am unteren Endbereich der Kammer 18 angeordnetes Dichtelement 19. Die zylindrische Kammer 18 ist mit einer Isolationsschicht 20 ausgekleidet. Im Bereich der Isolationsschicht ist eine aus einem elektrisch leitfähigen Material bestehende ringförmige Elektrode 21 angeordnet, die mit einer Hochspannungsleitung in Verbindung steht. Die Kolbenstange 3 ist geerdet. Weiterhin ist die Kammer 18 mit einer elektrorheologischen Flüssigkeit gefüllt, so dass bei elektrischer Ansteuerung zwischen der ringförmigen Elektrode 21 und der Kolbenstange 3 die elektrorheologische Flüssigkeit mit einem elektrischen Feld beaufschlagt werden kann.

Anstelle der Verwendung einer elektrorheologischen Flüssigkeit kann auch eine magnetorheologische Flüssigkeit oder ein Gemisch beider Flüssigkeiten eingesetzt werden. Bei der Verwendung von magnetorheologischen Flüssigkeiten werden anstelle der Elektrodenanordnungen elektrisch ansteuerbare Spulenanordnungen vorgesehen.

## Patentansprüche

1. Vorrichtung zum Fixieren von beweglich gelagerten Teilen, die eine Zylinder-Kolben-Einheit umfasst, wobei der Kolben (2) relativ zu dem Zylinder (1) verschiebbar gelagert ist, **dadurch gekennzeichnet, daß** zwischen Zylinder (1) und Kolben (2) mindestens ein Kontaktbereich ausgebildet ist, der eine abgedichtete Kammer (17/18) umfasst, und wobei diese Kammer (17/18) mit elektrorheologischer und/oder magnetorheologischer Flüssigkeit gefüllt ist, und wobei der Kammer (17/18) Elektroden und/oder Spulenanordnungen zugeordnet sind, die eine Veränderung der rheologischen Eigenschaften der elektrorheologischen und/oder magnetorheologischen Flüssigkeit bewirken.

2. Vorrichtung zum Fixieren von beweglich gelagerten Teilen nach Patentanspruch 1, wobei der Kolben (2) axial verschiebbar in dem Zylinder (1) gelagert ist und den Zylinder (1) in zwei Arbeitskammern (5, 6) unterteilt und in den Kolben (2) eine die Arbeitskammern (5, 6) verbindende Durchgangsbohrung (12) eingebracht ist und die abgedichtete Kammer (17) durch eine in die Mantelfläche des Kolbens (2) eingebrachte radial umlaufende Nut (13) und endseitig an der Mantelfläche des Kolbens (2) angeordnete umlaufende Dichtelemente (16) gebildet wird.

3. Vorrichtung zum Fixieren von beweglich gelagerten Teilen nach Patentanspruch 1, wobei der Kolben (2) axial verschiebbar in dem Zylinder (1) gelagert ist und den Zylinder (1) in zwei Arbeitskammern (5, 6) unterteilt und der Kolben (2) eine Kolbenstange (3) aufweist, die aus dem Zylinder (1) herausgeführt ist und wobei die Kolbenstange (3) durch die abgedichtete Kammer (18) verläuft und die Kammer (18) durch einen zylindrischen mit dem Zylinder (1) im oberen Endbereich in Verbindung stehenden Gehäuseabschnitt gebildet wird.

## Claims

1. Device for fixing movably mounted parts which comprises a cylinder-piston unit, wherein the piston (2) is mounted such that it can be displaced relative to the cylinder (1), **characterised in that** there is formed between the cylinder (1) and the piston (2) at least one contact region, which comprises a sealed chamber (17/18), and wherein this chamber (17/18) is filled with electrorheological and/or magnetorheological fluid, and wherein there are associated with the chamber (17/18) electrodes and/or coil arrangements, which effect a variation in the rheological properties of the electrorheological and/or magnetorheological fluid.

2. Device for fixing movably mounted parts according to Claim 1, wherein the piston (2) is mounted such that it can be axially displaced in the cylinder (1) and the cylinder (1) is divided into two working chambers (5, 6) and a through-bore (12), which connects the working chambers (5, 6), is produced in the piston (2) and the sealed chamber (17) is formed by a radial circumferential groove (13), which is produced in the cylindrical surface of the piston (2), and circumferential end sealing elements (16) disposed on the cylindrical surface of the piston (2).

3. Device for fixing movably mounted parts according to Claim 1, wherein the piston (2) is mounted such that it can be axially displaced in the cylinder (1) and the cylinder (1) is divided into two working chambers (5, 6) and the piston (2) comprises a piston rod (3) which is guided out of the cylinder (1), and wherein the piston rod (3) extends through the sealed chamber (18) and the chamber (18) is formed by a cylindrical housing section which is connected to the cylinder (1) in the top end region.

## Revendications

1. Dispositif destiné à fixer des pièces montées mobiles comportant une unité à cylindre et piston, le piston (2) étant monté mobile en translation par rapport au cylindre (1), **caractérisé en ce que** entre le cylindre (1) et le piston (2) est réalisée au moins une zone de contact, qui comporte une chambre (17, 18) étanche, cette chambre (17, 18) étant remplie d'un liquide électro-rhéologique et/ou magnéto-rhéologique, et des électrodes et/ou des systèmes de bobines étant associés à la chambre (17, 18), lesquels génèrent une modification des propriétés rhéologiques du liquide électro-rhéologique et/ou magnéto-rhéologique.

2. Dispositif destiné à fixer des pièces montées mobiles selon la revendication 1, dans lequel le piston (2) est monté mobile dans le sens axial dans le cylindre (1) et divise le cylindre (1) en deux chambres de travail (5, 6), et une forure débouchante (12) reliant les chambres de travail (5, 6) est réalisée dans le piston (2), et la chambre (17) étanche est formée par une rainure (13) périphérique, ménagée radialement dans la surface latérale du piston (2), et par des éléments d'étanchéité (16) périphériques, disposés au niveau des extrémités contre la surface latérale du piston (2).

3. Dispositif destiné à fixer des pièces montées mobiles selon la revendication 1, dans lequel le piston (2) est monté mobile dans le sens axial dans le cylindre (1) et divise le cylindre (1) en deux chambres de travail (5, 6), et le piston (2) comporte une tige (3) qui est guidée hors du cylindre (1), et la tige de piston (3) passant à travers la chambre étanche (18), et la chambre (18) est formée par une partie de boîtier cylindrique reliée dans la zone d'extrémité supérieure au cylindre (1).
